# EUROPEAN PATENT SPECIFICATION

(11) **EP 1 976 248 B1**
(45) Date of publication and mention of the grant of the patent: **19.10.2011**
(21) Application number: 07006593.3
(22) Date of filing: 29.03.2007
(51) Int. Cl.: H04M 1/725

(54) **Mobile terminal and method for operating a mobile terminal**
Mobiles Endgerät und Verfahren zum Betrieb eines mobilen Endgeräts
Terminal mobile et son procédé de fonctionnement

(43) Date of publication of application: 01.10.2008
(73) Proprietor: Vodafone Holding GmbH, 40213 Düsseldorf (DE)
(72) Inventor: Koraichi, Najib, 6333 CT Schimmert (NL); Montaner, Javier, 6211 GD Maastricht (NL)
(74) Representative: Cullinane, Marietta Bettina

(56) References cited:
- WO-A-03/009620
- WO-A-2004/100582
- US-B1- 6 871 063

## Description

The present invention relates to a mobile terminal and to a method for operating a mobile terminal.

Common mobile terminals are generally equipped with a user identity module, such as a subscriber identity module (SIM) card or other universal integrated circuit card (UICC) which is accessed from the mobile equipment system or function (ME). The communication or data transfer between the user identity module and the mobile equipment function is mainly governed by the operating system of the mobile terminal or the execution environment of the application currently used in the mobile terminal. For example, in the J2ME environment, the Java API defined in Java Specification Request JSR177 can be used. Also applications for the Symbian or Windows Mobile operating systems use different APIs. The communication between the user identity module and the mobile equipment system in known mobile terminals is based on the existing smartcard standard ISO 7816 interface. This interface imposes a master-slave communication between these two units, wherein the mobile equipment system is acting as the master.

The division of functionalities within the mobile terminal may be beneficial as for example secure data may be stored on the user identity module and may be decoded by using keys stored in the mobile equipment system or vice versa, as described in DE 101 59 398 A1. The divided design of the mobile terminal and the communication used between the two units, however, results is some major drawbacks.

Besides the limitation of communication to the master-slave communication, also the provision of data or signals to the individual units, i.e. the mobile equipment system and the user identity module, is difficult. Such provision of data or signals to the two units may be necessary, in order to implement and deploy a split mobile application on the mobile terminal. In this case, two different channels, local or remote, must be provided for transmitting one part of the application to the mobile equipment system and the other part to the user identity module. Additionally, since these transmission channels are usually managed by different servers, the implementation and deployment of a split application requires a cumbersome and error prone management solution.

The problem to be solved by the present invention is thus to provide a solution, wherein communication to and/or between individual units within a mobile terminal is facilitated.

The invention is based on the finding that this problem can be solved by providing an interface to the two units, which provides a common communication channel to either of the units and to other external elements.

According to a first aspect, the present invention relates to a mobile terminal for a mobile communication network, comprising a mobile equipment system and at least one user identity module. The mobile terminal is **characterized in that** a contactless chipset interface is interposed in the communication channel between the mobile equipment system and at least one user identity module.

By interposing the contactless chipset interface between the mobile equipment and the user identity module, a communication independent of the mutual relation of the units is realized. Hence, communication protocols different from the protocols prevailing known communication between the mobile equipment system and the user identity module can be established. Thereby, the flexibility in assigning functions of the units within a communication channel is increased. In particular, a master-slave relation between the mobile equipment system and the user identity module is not mandatory.

The mobile terminal is in particular a mobile phone. The mobile equipment system is a unit or function within the mobile terminal for execution of the operating system, applications and/or for storing data. The user identity module may be a subscriber identity module (SIM) card or any other universal integrated circuit card (UICC). The contactless chipset interface is preferably a unit which is at least partially provided within the mobile terminal for communication via a short range communication system such as near field communication (NFC) with external units. The contactless chipset interface, in particular the unit provided within the mobile terminal may be the tag / card of the NFC system or may be the reader of the NFC system. In either case the contactless chipset interface will be provided with means to communicate with the user identity module and the mobile equipment system. These means may in particular comprise units for conversion of signals received via a wireless communication to a format for transmission within the mobile terminal. Also units for transmission of signals from the user identity module to the mobile equipment system and vice versa are provided within the contactless chipset interface. These units may at least partially be software. The communication channel between the user identity module and the contactless chipset interface and between the mobile equipment system and the contactless chipset interface serves for transmission of signals, in particular data or information signals. The signals can be transmitted in either direction, i.e. to or from the contactless chipset interface. Signals according to the present invention comprise calls or requests issued by an application on the mobile terminal or the user identity module. In addition or alternatively, the signals may comprise data signals transmitting data, such as an application or other content and/or information. Information may be input data for applications, parameter values for communication policies, e.g. DRM policies, location based policies. Communication will hereinafter be referred to as the transmission of signals from one unit to at least one other unit. The path of the signals during the communication will also be referred to as the communication channel.

By providing improved communication channels within the mobile terminal, the communication or data transfer between the mobile equipment system and the user identity module is facilitated. In particular, applications being partially stored or executed on both units, the mobile equipment system and the user identity module, can be executed in a simplified way, due to the interposed contactless chipset interface.

The contactless chipset interface may consist of only a unit within the mobile terminal, i.e. an internal chipset. In this case, only communication between units within the mobile terminal is directed and handled via the contactless chipset interface. In addition or alternatively, the contactless chipset interface may comprise an internal chipset within the mobile terminal and at least one external unit. The external unit of the contactless chipset interface is preferably a contactless card, tag or a contactless reader, which is at least temporarily connected via short range communication, e.g. NFC, to the internal chipset within the mobile terminal.

The external unit may serve as part of the communication channel between the mobile equipment system and the user identity module. In this case communication signals received from the mobile equipment system and the user identity module, respectively, will be received at the internal chipset of the contactless chipset interface and may be transmitted through the external unit before being delivered to the respective other unit, i.e. the user identity module or the mobile equipment system. Such diverting of signal or data transmission via the external unit can be employed for control and/or security purposes.

The external unit may also be used to obtain supplementary information for transmission of signals between the mobile equipment system and the user identity module. Upon receipt of a signal at the internal chipset, the internal chipset can issue a request for additional information from the external unit. This additional information may be policy information, such as location information or authorization information for the transmission from the mobile equipment system to the user identity module and vice versa. Only if the required additional information is received at the internal chipset from the external unit, the signal originally received at the internal chipset will be forwarded from the internal chipset to the respective unit, i.e. mobile equipment system or user identity module.

The external unit may additionally or alternatively serve as a bridge for communication or data transfer between internal units of the mobile terminal and an external data source such as a PC, a server, a consumer electronics device or data carriers. In this embodiment, the external unit represents the access or entry point to which external data for distribution within the mobile terminal has to be provided.

The communication channel between the mobile equipment system and the user identity module via the contactless chipset interface is preferably set to be a peer to peer communication channel. Peer to peer communication channels are advantageous over master-slave channels, in that the communication can be initiated and controlled by either of the peers. The peer to peer channel is possible in the inventive mobile terminal, as the channel characteristics are defined by the communication of the contactless chipset interface to the respective units and may be preset at the contactless chipset interface.

The user identity module is preferably a physical unit which is removable from the mobile terminal. The mobile equipment system may consist of one or more physical units and/or software units within the mobile terminal. The contactless chipset interface, in particular the internal chipset thereof, may be one or more physical units and/or software units within the mobile terminal.

According to a further aspect, the present invention relates to a method for operating a mobile terminal of a mobile communication network comprising at least one mobile equipment system and at least one user identity module. The method is **characterized in that** a contactless chipset interface establishes a communication channel to the mobile equipment system and/or at least one user identity module upon receipt of a signal.

The signal may be received from either the user identity module, the mobile equipment system or from an external data source. In the latter case, the signal will preferably be transmitted to the contactless chipset interface within the mobile terminal, i.e. an internal chipset from an external unit of the contactless chipset interface. The signal can comprise data to be transmitted as well as information on the intended receiving unit. The establishment of a communication channel is preferably the transmission of signals received at the contactless chipset interface to the receiving unit. This means that the contactless chipset interface does not establish a new physical communication connection to the respective receiving unit but upon receipt of a signal uses an existing physical communication connection for transmission of signals to the respective receiving unit, i.e. the mobile equipment system and/or the user identity module. The transmission may be carried out via a wired connection between the contactless chipset interface and the mobile equipment system or user identity module.

A signal from a unit of the mobile terminal, in particular the mobile equipment system or the user identity module, which is intended to be delivered to a further unit of the mobile terminal, in particular the user identity module or the mobile equipment system, may be received at a contactless chipset interface for transmission to the respective intended receiving unit. In this context intended means that the signal is addressed to the respective unit. The addressing to the unit may be inherent within the signal or may be assigned at the contactless chipset interface according to addressing rules laid down therein. The subsequent transmission from the contactless chipset interface may be initiated immediately upon receipt of the signal. In this case, the contactless chipset interface serves for mere forwarding of signals according to the protocol prevailing for the communication between the contactless chipset interface and the respective unit, i.e. the mobile equipment system and the user identity module. Alternatively, the subsequent transmission to the intended receiving unit may be postponed until after additional processing of the signal has been carried out and / or additional information is obtained at the contactless chipset interface, in particular the internal chipset. Such processing may comprise the transmission of the signal to or requesting of information from an external unit of the contactless chipset interface for control or security purposes.

According to one embodiment, an internal chipset of the contactless chipset interface, upon receipt of a signal from at least one unit of the mobile terminal intended to be delivered to a further unit of the mobile terminal, examines the availability of an external unit of the contactless chipset interface in short range communication with the internal chipset of the mobile terminal. The examination for availability may be carried out by the internal chipset by emitting a signal and monitoring for response signals from an external unit. The examination or monitoring for the availability of an external unit may be initiated due to rules and policies laid down at the internal chipset or may be inherent in the signal to be forwarded by the internal chipset.

According to one embodiment of the invention, upon detection of an external unit, the internal chipset directs the signal received from the unit within the mobile terminal via the external unit. In this case, the signal may be transmitted to the external unit and will be re-transmitted to the internal chipset. Preferably, a re-transmission will only occur after processing of the signal at the external unit. The processing of the signal may comprise the verification of compliance with policies stored on the external unit. If the policy is not fulfilled, the signal will not be re-transmitted.

According to another embodiment, the transmission of the signal received at the contactless chipset interface to the intended receiving unit within the mobile terminal is dependent of information made available from the external unit. The information may comprise information relating to the present location or authentication of the user of the mobile terminal. In this case location based services or protection policies can be provided. Also information on communication policies within the mobile terminal may be information made available from the external unit. In this case for example only specific types of communication may be allowed according to the policy.

This information may be processed at the external unit or may be transmitted from the external unit to the internal chipset. In the latter case the processing of the signal will be carried out at the internal chipset. Alternatively, the processing of the signal may be carried out at the external unit and, depending on the processing result, the signal may be retransmitted to the internal chipset or the transmission may be terminated.

The contactless chipset interface may at least temporarily be connected to a data source external to the mobile terminal. The connection to the data source may be established in order to retrieve or deliver data from or to the data source. The data source may be a PC, a consumer electronics device and/or a server, e.g. on the Internet. The communication to the external data source may be initiated from the mobile terminal. The communication will be directed via the internal chipset. If the user of the mobile terminal for example indicates that a specific content or application is to be downloaded from a server, e.g. on the Internet, the request for download may be transmitted from the mobile equipment system to the internal chipset. Subsequently, the signal will be further transmitted to the external unit which may then connect to the data source.

Alternatively, the external unit of the contactless chipset interface may receive a signal from the data source and may transmit the signal via the contactless communication channel between the external unit and the internal chipset to the internal chipset. There the signal transmitting the application or content will be transmitted to the respective units within the mobile terminal, in particular the mobile equipment system or the user identity module. The path which is assigned to the signal or to parts thereof within the mobile terminal may be indicated within the signal received from the external data source or may be indicated within the internal chipset of the contactless chipset interface.

In yet another alternatively embodiment, the content or application to be downloaded to the mobile terminal may be stored on the external unit beforehand. In this case, the external unit may be brought into connection with communication means for retrieving the respective data or application from a data source and the data may be stored on the external unit. Once brought into the close vicinity of the mobile terminal with the internal chipset, the data or application stored on the external unit may be transferred to the internal chipset and part of the application which is to reside and/or be executed on the mobile equipment system will be transmitted to the mobile equipment system. The part of the application which is to be stored and/or executed on the user identity module will be transmitted to the user identity module.

Applications or content received from an external data source via the external unit and the internal chipset may, hence, be distributed to a user identity module and a mobile equipment system via the contactless chipset interface.

The data source will preferably be made available to the mobile terminal through the external unit of the contactless chipset interface which is at least temporarily in communication connection, preferably via NFC, with the internal chipset.

Features and advantages described with reference to the mobile terminal of the invention also apply to the inventive method and vice versa.

The invention will now be described again with reference to the enclosed figures, wherein:
Figure 1: is a schematic view of an embodiment of the mobile terminal according to the present invention;
Figure 2: is a schematic view of another embodiment of the mobile terminal according to the invention; and
Figure 3: is another schematic view of the embodiment of the mobile terminal of Figure 2.

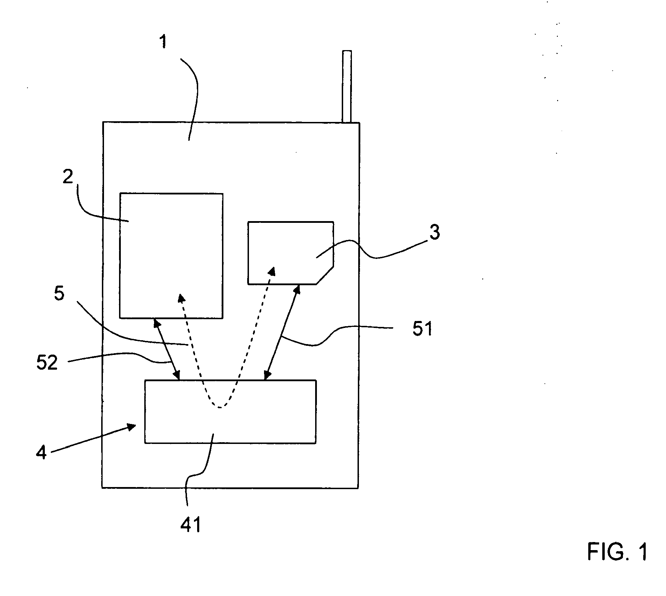

In Figure 1 a mobile terminal 1 is schematically depicted as a mobile phone. In the mobile phone 1 a mobile equipment system 2 is provided which may include processing and/or memory units. In addition, a user identity module 3, in particular a UICC card is provided within the mobile terminal 1. The UICC card 3 may be a SIM card inserted into a respective receptacle in the mobile phone 1. Finally, a contactless chipset interface 4 is provided within the mobile phone. In the depicted embodiment of the mobile phone 1 the contactless chipset interface 4 consists of an internal chipset 41.

The internal chipset 41 is connected to the mobile equipment system 2 and the user identity module 3 via communication channels 51, 52. The communication channel 5 between the user identity module 3 and the mobile equipment system 2 is thus directed via the contactless chipset interface 4.

The function of the mobile phone 1 will now be described by means of an example use case. Some applications are drafted to be executed on or to require access to both the mobile equipment system 2 and the user identity module 3. The application may be executed completely on the mobile equipment system 2 and only input data necessary for running the application has to be retrieved from the user identity module 3. If the user launches such an application on his mobile phone 1, the mobile equipment system 2 will issue a request for the respective input data from the user identity module 3. According to the present invention, the request is not forwarded to the user identity module 3 directly. Instead, the request is transmitted to the contactless chipset interface 4, in particular the internal chipset 41. From the internal chipset 41 the request will be transmitted to the user identity module 3 for retrieval of the requested input data. The retrieved data will be made available at the mobile equipment system 2 via the internal chipset 41.

Even though the communication has been described in this example use case to be initiated from the mobile equipment system 2, it is obvious that in an alternative example use case the communication may be initiated from the user identity module 3 instead and be directed to the mobile equipment system 2. The signals and requests will then be directed in the opposite direction, i.e. from the user identity module 3 via the contactless chipset 41 to the mobile equipment system 2 and from the mobile equipment system 2 via the contactless chipset 41 to the user identity module 3.

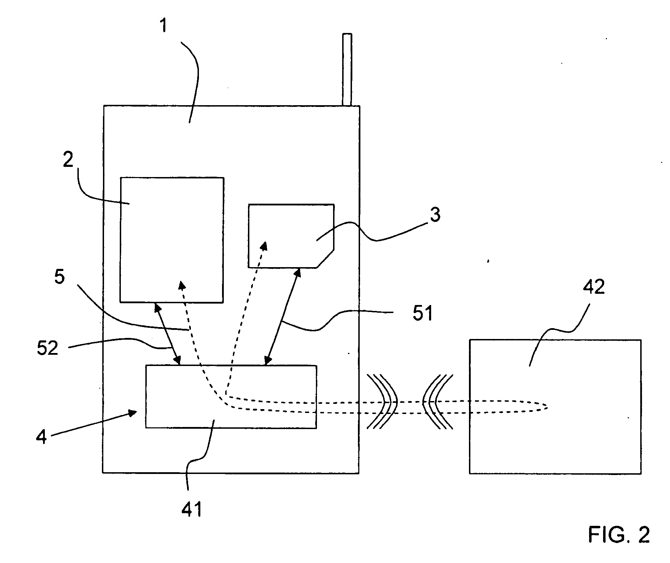

In Figure 2 an alternative embodiment of the inventive mobile phone is shown.

In the embodiment shown in Figure 2 an external unit 42 of the contactless chipset interface 4 is provided which can communicate with the internal chipset 41 via short range communication, in particular NFC. With this embodiment a different processing of signals and communication within the mobile phone 1 may be realized. If a signal from the mobile equipment system 2 is to be transmitted to the user identity module 3, it will first be received at the internal chipset 41. Such a signal may be a request for input data for an application presently run on the mobile equipment system 2 or any other call from the mobile equipment system 2 to the user identity module 3. Due to settings within the internal chipset 41 or due to characteristics of the signal the internal chipset 41 may try to establish a connection to an external unit 42 of the contactless chipset interface 4. If an external unit 42 is available, the signal received at the internal chipset 41 from the mobile equipment system 2 may either be transmitted to the external unit 42 or a request to retrieve specific information from the external unit 42 may be issued to the external unit 42.

The routing of the signal to be transmitted to the user identity module 3 via the external unit 42 and/or the retrieval and receipt of additional information from the external unit 42 may be used for control or security purposes. On the external unit 42 policies may be stored which determine the communication within the mobile phone 1. For example, the communication types allowed for specific signals from the mobile equipment system 2 to the user identity module 3 or vice versa may be preset at the external unit 42. In addition or alternatively, the additional information to be retrieved from the external unit may be used to enable location based features within the mobile phone 1.

The signal originally received from the internal chipset 41 or the signal forwarding additional information from the external unit 42 will then be directed to the internal chipset 41. In the first case, where the signal originally received at the internal chipset 41 had been transmitted to the external unit 42, the signal will be preferably be processed at the external unit 42. In particular, the compliance with policy requirements may be carried out at the external unit 42. In the second case, where only a request for additional information had been issued from the internal chipset 41 to the external unit 42, the processing of the signal originally received at the internal chipset 41 will be carried out at the internal chipset 41. Where the internal chipset 41 is an NFC reader the request for additional information may be accessing of a tag or card which acts as an external unit 42.

Even though the communication has again been described in this example use case to be initiated from the mobile equipment system 2, it is obvious that in an alternative example use case the communication may be initiated from the user identity module 3 instead and be directed to the mobile equipment system 2. The signals and requests will then be directed in the opposite direction, i.e. from the user identity module 3 via the contactless chipset interface 4, in particular contactless chipset 41 and external unit 42 to the mobile equipment system 2 and from the mobile equipment system 2 via the contactless chipset interface 4 to the user identity module 3.

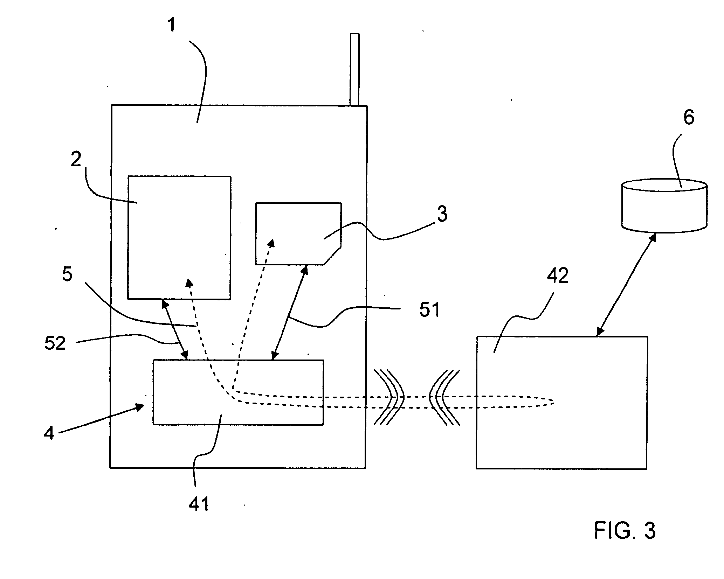

In Figure 3 another schematic view of the embodiment of the mobile terminal is shown. In this embodiment the units and setup of the mobile phone 1 do not differ from the embodiment shown in Figure 2. In addition, however, a data source 6 is provided. The data source 6, which can be a PC, a consumer electronics device and/or a server of a communication network or any data carrier, is in communication connection with the external unit 42 of the contactless chipset interface 4.

A use case for the setup shown in Figure 3 will now be described. A user wants to download an application to his mobile device 1. For this purpose, he will access the data source 6 where the respective application or content is stored. This access may be carried out via the contactless chipset interface 4. The application may be a so called split application, where part of the application is to be stored on the mobile equipment system 2 and another part is to be stored on the user identity module 3. For applications of this nature so far two channels had to be established by the operator of the mobile communication network to the mobile phone 1, i.e. one channel to the user identity module 3 and one channel to the mobile equipment system 2. With the present invention such download processes only require one single channel with the mobile phone 1, in particular with the contactless chipset interface 4. The application downloaded from the data source 6 will be received at the external unit 42 and it may even be stored there. Via the short range communication with the internal chipset 41 the application can be transmitted from the external unit 42. From the internal chipset 41 parts of the application will be forwarded to mobile equipment system 2 and other parts will be forwarded to the user identity module 3. The distribution of the part of the application may be inherent within the application, i.e. the intended receiving unit for storing the part of the application within the mobile phone 1 may be preset within the application. Alternatively, the contactless chipset interface 4, in particular the internal chipset 41 may split the application according to rules laid down in the internal chipset 41.

With the present invention a contactless function within a mobile phone can serve as a communication channel between the user identity module, in particular UICC, and the mobile equipment. The communication channel is a new common / universal channel between the internal chipset (NFC) and the mobile equipment as well as between the internal chipset (NFC) and the UICC. The present invention, hence, allows for an easier management of mobile terminals, such as mobile phones, and user identity modules such as SIM's. Also the downloading and deployment of applications, in particular split applications, to mobile terminals is facilitated with the present invention, as an external unit can communicate directly with both the mobile equipment and the UICC. Applications which work across the mobile equipment system and the user identity module will be supported by the present invention by a simplified and improved management and control of signals within the mobile phone. Furthermore, it will be possible to connect the user identity module with a PC or consumer electronics devices, wherein monitoring and securing of transmissions will be possible. Finally, a DRM solution may be provided by the present invention, as the communication from the mobile equipment system to the user identity module or vice versa may be dependent of authentication. Such DRM may be reinforced by requesting a specific tag, card or reader to be present for the internal chipset to be able to communicate therewith.

## Claims

1. Mobile terminal for a mobile communication network, comprising a mobile equipment system (2) and at least one user identity module (3), **characterized in that** a contactless chipset interface (4) is interposed in the communication channel (5) between the mobile equipment system (2) and at least one user identity module (3).

2. Mobile terminal according to claim 1, **characterized in that** the contactless chipset interface (4) comprises an internal chipset (41) within the mobile terminal (1) and at least one external unit (42), which is at least temporarily connected via short range communication to the internal chipset (41) within the mobile terminal (1).

3. Mobile terminal according to claim 2, **characterized in that** the at least one external unit (42) is a contactless card, tag or a contactless reader.

4. Mobile terminal according to claim 1 or 3, **characterized in that** the communication channel (5) between the mobile equipment system (2) and the user identity module (3) via the contactless chipset interface (4) is a peer to peer communication channel.

5. Method for operating a mobile terminal (1) of a mobile communication network comprising at least one mobile equipment system (3) and at least one user identity module (2), **characterized in that** a contactless chipset interface (4) establishes a communication channel (52, 51) to the mobile equipment system (2) and/or at least one user identity module (3) upon receipt of a signal.

6. Method according to claim 5, **characterized in that** a signal from a unit (2, 3) of the mobile terminal (1) intended to be delivered to a further unit (3, 2) of the mobile terminal (1) is received at a contactless chipset interface (4) for transmission to the respective intended receiving unit (3, 2).

7. Method according to any of claims 5 or 6, **characterized in that** an internal chipset (41) of the contactless chipset interface (4) upon receipt of a signal from at least one unit (2, 3) of the mobile terminal (1) intended to be delivered to a further unit (3, 2) of the mobile terminal (1) examines the availability of an external unit (42) of the contactless chipset interface (4) in short range communication with the internal chipset (41) of the mobile terminal (1).

8. Method according to claim 7, **characterized in that** the internal chipset (41) upon detection of an external unit (42) directs the signal received from the unit (2, 3) within the mobile terminal (1) via the external unit (42).

9. Method according to claim 8, **characterized in that** the transmission of the signal received at the contactless chipset interface (4) to the intended receiving unit (2, 3) within the mobile terminal (1) is dependent of information made available from the external unit (42).

10. Method according to any of claims 54 to 9, **characterized in that** the contactless chipset interface (4) is at least temporarily connected to a data source (6) external to the mobile terminal (1).

11. Method according to claim 10, **characterized in that** data signals received from the data source (6) are being distributed to a user identity module (3) and a mobile equipment system (2) via the contactless chipset interface (4).

12. Method according to claims 10 or 11, where the data source (6) is made available through an external unit (42) of the contactless chipset interface (4).

## Patentansprüche

1. Mobiles Endgerät für ein Mobilfunknetz, umfassend ein Mobil-Equipment-System (2) und zumindest ein Nutzeridentifikationsmodul (3), **dadurch gekennzeichnet, dass** eine kontaktlose Chipset-Schnittstelle (4) in dem Kommunikationskanal (5) zwischen dem Mobil-Equipment-System (2) und dem mindestens einen Nutzeridentifikationsmodul (3) zwischengeschaltet ist.

2. Mobile Endgerät nach Anspruch 1, **dadurch gekennzeichnet, dass** die kontaktlose Chipset-Schnittstelle (4) einen internen Chipset (41) in dem mobilen Endgerät (1) und zumindest eine externe Einheit (42) umfasst, die zumindest zweitweise über Nahbereichkommunikation mit dem internen Chipset (41) in dem mobilen Endgerät (1) verbunden ist.

3. Mobiles Endgerät nach Anspruch 2, **dadurch gekennzeichnet, dass** die zumindest eine externe Einheit (42) eine kontaktlose Karte, ein Tag oder ein kontaktloser Leser ist.

4. Mobiles Endgerät nach einem der der Ansprüche 1 oder 3, **dadurch gekennzeichnet, dass** der Kommunikationskanal (5) zwischen dem Mobil-Equipment-System (2) und dem Nutzeridentifikationsmodul (3) über die kontaktlose Chipset-Schnittstelle (4) ein peer-to-peer Kommunikationskanal ist.

5. Verfahren zum Betreiben eines mobilen Endgerätes (1) eines mobilen Kommunikationsnetzes, umfassend zumindest ein Mobil-Equipment-System (3) und zumindest ein Nutzeridentifikationsmodul (2), **dadurch gekennzeichnet, dass** eine kontaktlose Chipset-Schnittstelle (4) einen Kommunikationskanal (52, 51) zu dem Mobil-Equipment-System (2) und/oder zumindest einem Nutzeridentifikationsmodul (3) herstellt, wenn ein Signal empfangen wird.

6. Verfahren nach Anspruch 5, **dadurch gekennzeichnet, dass** ein Signal von einer Einheit (2, 3) des mobilen Endgerätes (1), das an eine weitere Einheit (3, 2) des mobilen Endgerätes (1) geliefert werden soll, zur Übertragung an die jeweilige beabsichtigte empfangende Einheit (3, 2) an der kontaktlose Chipset-Schnittstelle (4) empfangen wird.

7. Verfahren nach einem der Ansprüche 5 oder 6, **dadurch gekennzeichnet, dass** , wenn ein Signal von zumindest einer Einheit (2, 3) des mobilen Endgerätes (1), das an eine weitere Einheit (3, 2) des mobilen Endgerätes (1) übermittelt werden soll, empfangen wird, ein interner Chipset (41) der kontaktlosen Chipset-Schnittstelle (4) die Verfügbarkeit einer externen Einheit (42) der kontaktlosen Chipset-Schnittstelle (4) in Nahbereichkommunikation mit dem internen Chipset (41) des mobilen Endgerätes (1) überprüft.

8. Verfahren nach Anspruch 7, **dadurch gekennzeichnet, dass**, wenn eine externe Einheit (42) erkannt wird, der interne Chipset (41) das Signal, das von der Einheit (2, 3) in dem mobilen Endgerät (1) empfangen wurde, über die externe Einheit (42) leitet.

9. Verfahren nach Anspruch 8, **dadurch gekennzeichnet, dass** die Übertragung des Signals, das an der kontaktlosen Chipset-Schnittstelle (4) empfangen wurde, an die beabsichtigte empfangende Einheit (2, 3) in dem mobilen Endgerät (1) abhängig von Informationen ist, die von der externen Einheit (42) verfügbar gemacht werden.

10. Verfahren nach einem der Ansprüche 5 bis 9, **dadurch gekennzeichnet, dass** die kontaktlose Chipset-Schnittstelle (4) zumindest zeitweise mit einer Datenquelle (6), die zu dem mobilen Endgerät (1) extern ist, verbunden ist.

11. Verfahren nach Anspruch 10, **dadurch gekennzeichnet, dass** Datensignale, die von der Datenquelle (6) empfangen werden, an ein Nutzeridentifikationsmodul (3) und an ein Mobil-Equipment-System (2) über die kontaktlose Chipset-Schnittstelle (4) verteilt werden.

12. Verfahren nach einem der Ansprüche 10 oder 11, wobei die Datenquelle (6) durch eine externe Einheit (42) der kontaktlosen Chipset-Schnittstelle (4) verfügbar gemacht wird.

## Revendications

1. Terminal mobile pour un réseau de communication mobile, comprenant un système d'équipement mobile (2) et au moins un module d'identification d'utilisateur (3), **caractérisé en ce qu'**une interface de circuit spécifique programmé sans contact (4) est interposée dans le canal de communication (5) entre le système d'équipement mobile (2) et au moins un module d'identification d'utilisateur (3).

2. Terminal mobile selon la revendication 1, **caractérisé en ce que** l'interface de circuit spécifique programmé sans contact (4) comprend un circuit spécifique programmé interne (41) à l'intérieur du terminal mobile (1) et au moins une unité externe (42), qui est connectée au moins temporairement par l'intermédiaire d'une communication à courte portée au circuit spécifique programmé interne (41) à l'intérieur du terminal mobile (1).

3. Terminal mobile selon la revendication 2, **caractérisé en ce que** la ou les unités externes (42) sont du type carte sans contact, étiquette ou lecteur sans contact.

4. Terminal mobile selon la revendication 1 ou 3, **caractérisé en ce que** le canal de communication (5) entre le système d'équipement mobile (2) et le module d'identification d'utilisateur (3) par l'intermédiaire de l'interface de circuit spécifique programmé sans contact (4) est un canal de communication d'égal à égal.

5. Procédé de commande d'un terminal mobile (1) d'un réseau de communication mobile comprenant au moins un système d'équipement mobile (3) et au moins un module d'identification d'utilisateur (2), **caractérisé en ce qu'**une interface de circuit spécifique programmé sans contact (4) établit un canal de communication (52, 51) vers le système d'équipement mobile (2) et/ou au moins un module d'identification d'utilisateur (3) lors de la réception d'un signal.

6. Procédé selon la revendication 5, **caractérisé en ce qu'**un signal provenant d'une unité (2, 3) du terminal mobile (1) destiné à être délivré à une autre à unité (3, 2) du terminal mobile (1) est reçu au niveau d'une interface de circuit spécifique programmé sans contact (4) afin d'être transmis à l'unité de réception respective destinataire (3, 2).

7. Procédé selon l'une quelconque des revendications 5 ou 6, **caractérisé en ce qu'**un circuit spécifique programmé interne (41) de l'interface de circuit spécifique programmé sans contact (4) lors de la réception d'un signal à partir d'au moins d'une unité (2, 3) du terminal mobile (1) destiné à être délivré à une autre unité (3, 2) du terminal mobile (1) examine la disponibilité d'une unité externe (42) de l'interface de circuit spécifique programmé sans contact (4) en communication à courte portée avec le circuit spécifique programmé interne (41) du terminal mobile (1).

8. Procédé selon la revendication 7, **caractérisé en ce que** le circuit spécifique programmé interne (41), lors de la détection d'une unité externe (42) dirige le signal reçu à partir de l'unité (2, 3) à l'intérieur du terminal mobile (1) par l'intermédiaire de l'unité externe (42).

9. Procédé selon la revendication 8, **caractérisé en ce que** la transmission du signal reçu au niveau de l'interface de circuit spécifique programmé sans contact (4) à l'unité de réception destinataire (2, 3) à l'intérieur du terminal mobile (1) dépend d'informations rendues disponibles à partir de l'unité externe (42).

10. Procédé selon l'une quelconque des revendications 5 à 9, **caractérisé en ce que** l'interface de circuit spécifique programmé interne sans contact (4) est connectée au moins temporairement à une source de données (6) externe au terminal mobile (1).

11. Procédé selon la revendication 10, **caractérisé en ce que** des signaux numériques reçus à partir de la source de données (6) sont distribués à un module d'identification d'utilisateur (3) et à un système d'équipement mobile (2) par l'intermédiaire de l'interface de circuit spécifique programmé sans contact (4).

12. Procédé selon les revendications 10 ou 11, dans lequel la source de données (6) est rendue disponible par l'intermédiaire d'une unité externe (42) de l'interface de circuit spécifique programmé sans contact (4).
